# EUROPÄISCHE PATENTSCHRIFT

(11) **EP 2 073 325 B1**
(45) Veröffentlichungstag und Bekanntmachung des Hinweises auf die Patenterteilung: **12.09.2012**
(21) Anmeldenummer: 08105890.1
(22) Anmeldetag: 28.11.2008
(51) Int. Cl.: H01S 3/02, H01S 3/042, G01C 15/10

(54) **Optoelektrische Baugruppe mit einem frequenzverdoppelten Festkörperlaser**
Optoelectric assembly with a frequency-doubled solid state laser
Composant optoélectrique doté d'un laser à l'état solide à fréquence doublée

(30) Priorität: 18.12.2007 DE 102007055848
(43) Veröffentlichungstag der Anmeldung: 24.06.2009
(73) Patentinhaber: HILTI Aktiengesellschaft, 9494 Schaan (LI)
(72) Erfinder: Tiefenthaler, Stefan, 6812 Meiningen (AT); Dang, Lieu-Kim, 9473 Gams (CH)

(56) Entgegenhaltungen:
- GB-A- 191 420 179
- JP-A- 59 022 382
- US-A- 5 253 259
- US-A- 5 267 252
- US-A- 5 267 252
- US-A- 5 754 287
- US-B1- 6 177 987

## Beschreibung

Die Erfindung bezeichnet eine optoelektrische Baugruppe mit einem frequenzverdoppelten Festkörperlaser, insbesondere einem diodengepumpten Festkörperlaser (DPSS) mit Neodym dotiertem Yttrium-Orthovadanat (Nd:YVO4), dessen IR-Laserstrahl von 1064 nm mittels eines optisch nichtlinearen Kristalls aus Kalium-Titanyl-Phosphat (KTP) innerhalb des optischen Resonators in den grünen Spektralbereich von 532 nm frequenzverdoppelt wird, zur Verwendung in optoelektrischen Markiersystemen wie Baulasern.

Optoelektrische Markiersysteme werden im monomode-Betrieb (TEM00) verwendet, bei welcher der austretende, frequenzverdoppelte Laserstrahl nur genau ein räumliches Energiemaximum aufweist, welches somit beim Auftreffen auf ein reflektierendes Zielobjekt genau einen runden Leuchtfleck ergibt. In dem optisch nichtlinearen Kristall können jedoch abhängig von den Randbedingungen, insbesondere der Umgebungstemperatur, verschiedene Betriebs-Moden angeregt werden. Üblicherweise sind diese frequenzverdoppelten Festkörperlaser auf eine Betriebstemperatur von 15°C bis 30 °C spezifiziert.

Nach der US5495489 wird bei einer optoelektrischen Baugruppe mit einem modularen frequenzverdoppelten Festkörperlaser der optische Resonator mit einer koaxial umlaufenden Wärmequelle kombiniert und mit einem Steuermittel auf eine Betriebstemperatur nahe 30°C geregelt, d.h. je nach Auslegungsfall für unterschiedliche Umgebungstemperaturen zusätzlich über Peltier-Elemente geheizt und gekühlt, oder gegenüber der Umgebungstemperatur nur gekühlt oder nur geheizt. Dabei ist der optische Resonator koaxial innerhalb der steuerbaren Wärmequelle angeordnet, die selbst radial außen von einer koaxialen Wärmesenke mit Kühlrippen umgeben ist.

US5267252 offenbart eine optoelektrische Baugruppe mit einem in einer Halterung aus Metall festgelegten, frequenzverdoppelten Festkörperlaser mit einem optischen Resonator, wobei der optische Resonator wärmeleitend mit einer von einem Steuermittel steuerbaren Wärmequelle verbunden ist und die Betriebstemperatur des Festkörperlasers über das Steuermittel bis 40 °C eingestellt ist. US-B-6 177 987 offenbart ein launlot, welches in Wasser oder Quecksilber Schwimont.

Die Aufgabe besteht in der technologisch einfachen Realisierung einer optoelektrischen Baugruppe mit einem im monomode-Betrieb stabilen frequenzverdoppelten Festkörperlaser für einen Umgebungstemperaturbereich von -20 °C bis +45 °C und in der geeigneten Justage der optischen Achse des frequenzverdoppelten Festkörperlasers innerhalb der optoelektrischen Baugruppe.

Die Aufgabe wird durch die Merkmale des Anspruchs 1 gelöst. Vorteilhafte Weiterbildungen ergeben sich aus den Unteransprüchen.

So weist eine optoelektrische Baugruppe einen in einer Halterung aus Metall justiert festgelegten, modularen frequenzverdoppelten Festkörperlaser mit einem optischen Resonator auf, wobei der optische Resontor wärmeleitend mit einer von einem Steuermittel steuerbaren Wärmequelle verbunden ist und die Betriebstemperatur des Festkörperlasers über das Steuermittel zwischen 40 °C und 55 °C eingestellt ist. Erfindungsgemäß ist vorgesehen, dass der Festkörperlaser über eine aushärtbare Vergussmasse mit einer Wärmeleitfähigkeit im Bereich von 0,1 bis 1,0 W/(Km) in die Halterung aus Metall eingebettet ist.

Durch die unübliche und energetisch unökonomische hohe Betriebstemperatur des Festkörperlasers kann auch im Umgebungstemperaturbereich von -20 °C bis +45°C auf eine aktive Kühlung verzichtet werden, wodurch für die steuerbare Wärmequelle ein (gegenüber einem Peltier-Element) einfacheres und somit kostengünstigeres steuerbares Heizmittel hinreichend ist. Im Falle eines temperaturabhängigen Widerstands kann die Wärmequelle zugleich auch als Temperatursensor verwendet werden. Die aushärtbare Vergussmasse vereint einen (zur Kühlung durch die stets niedrigere Umgebungstemperatur) definierten Wärmefluss sowie eine einfache radiale und axiale Justage des Festkörperlasers in der Halterung aus Metall in technologisch einfacher Weise in sich.

Vorteilhaft ist das Heizmittel eine (selbstklebende) Heizfolie, die weiter vorteilhaft den optischen Resonator umlaufend umgibt, wodurch diese technologisch einfach im Bereich des optischen Resonators des modularen frequenzverdoppelten Festkörperlasers montierbar ist.

Vorteilhaft besteht die Vergussmasse aus Gips, welches weiter vorteilhaft mit Additiven wie Metallspänen versehen ist, wodurch sowohl die Wärmeleitfähigkeit als auch die Aushärtzeit in geeigneten Bereichen einstellbar ist.

Vorteilhaft ist zwischen dem modularen Festkörperlaser und der radial umgebenden Halterung optoelektrischen Baugruppe ein axial dichtendes Dichtmittel angeordnet, wobei das axial dichtende Dichtmittel einen Ringraum zwischen dem modularen Festkörperlaser und der umgebenden Halterung aus Metall in Richtung der Schwerkraft abdichtet. Durch das axial dichtende Dichtmittel wird (bei der optischen Justage unten angeordnet) ein Wegfliessen der noch zähflüssigen Vergussmasse verhindert und die optische Justage somit technologisch einfach.

Die Erfindung wird bezüglich eines vorteilhaften Ausführungsbeispiels näher erläutert mit einer Darstellung einer optoelektrischen Baugruppe.

Nach der Darstellung weist eine optoelektrische Baugruppe 1 einen darin justiert festgelegten, modularen frequenzverdoppelten Festkörperlaser 2 in Form eines diodengepumpten Festkörperlasers (DPSS) mit Neodym dotiertem Yttrium-Orthovadanat (Nd:YVO4) auf, dessen IR-Laserstrahl von 1064 nm mittels eines optisch nichtlinearen Kristalls aus Kalium-Titanyl-Phosphat (KTP) innerhalb eines optischen Resonators 3 in den grünen Spektralbereich von 532 nm frequenzverdoppelt wird und einen fokussierten grünen Laserstrahl 8 aussendet. Der Raumbereich des optischen Resonators 3 im modularen Festkörperlaser 2 ist wärmeleitend mit einer von einem Steuermittel 4 in Form eines Mikrocontrollers steuerbaren Wärmequelle 5 in Form einer selbstklebenden Heizfolie verbunden. Dabei dient der temperaturabhängige Widerstand der den optischen Resonator 3 umlaufend umgebenden Heizfolie dem Steuermittel 4 gleichzeitig als Temperatursensor. Indem im Steuermittel 4 als Sollwert eine Betriebstemperatur T von 50 °C programmiert ist, wird der Festkörperlaser 2 (nach der Initialisierung des Temperaturregelkreises) auch bei einer Betriebstemperatur T von 50 °C betrieben. Zwischen dem modularen Festkörperlaser 2 und einer radial umgebenden Halterung 9 der optoelektrischen Baugruppe 1 ist ein axial dichtendes Dichtmittel 6 angeordnet, welches bei der Justage den entstehenden Ringraum zur radial umgebenden Halterung 9 in Richtung der Schwerkraft G abdichtet. Nach der Aushärtung einer in diesen Ringraum eingefüllten aushärtbaren Vergussmasse 7 aus Gips mit Metallspänen mit einer Wärmeleitfähigkeit λ von 0,1 bis 1,0 W/(Km) (Wärmeleitfähigkeit λ der Metallspäne zwischen ca. 10 bis 100 W/(Km)) ist der Festkörperlaser 2 in die radial umgebende Halterung 9 axial und radial justiert eingebettet. Über die mit Metallspänen definiert eingestellte Wärmeleitfähigkeit λ von 0,1 bis 1,0 W/(Km) der Vergussmasse 7 erfolgt der wesentliche Teil des Wärmeflusses von der Wärmequelle 5 und dem Festkörperlaser 2 zur durch die Umgebungstemperatur U von 45 °C passiv gekühlten Halterung 9 aus Metall der optoelektrischen Baugruppe 1.

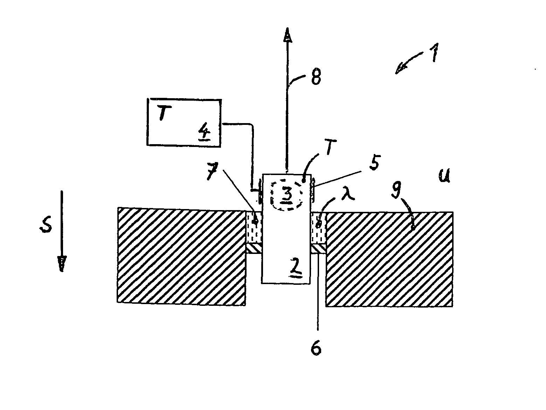

## Patentansprüche

1. Optoelektrische Baugruppe (1) mit einem in einer Halterung (9) aus Metall justiert festgelegten, modularen frequenzverdoppelten Festkörperlaser (2) mit einem optischen Resonator (3), wobei der optische Resonator (3) wärmeleitend mit einer von einem Steuermittel (4) steuerbaren Wärmequelle (5) verbunden ist und die Betriebstemperatur (T) des Festkörperlasers (2) über das Steuermittel (4) zwischen 40 °C und 55 °C eingestellt ist, **dadurch gekennzeichnet, dass** der Festkörperlaser (2) über eine aushärtbare Vergussmasse (7) mit einer Wärmeleitfähigkeit (λ) im Bereich von 0,1 bis 1,0 W/(Km) in die Halterung (9) aus Metall eingebettet ist.

2. Optoelektrische Baugruppe nach Anspruch 1, **dadurch gekennzeichnet, dass** die Wärmequelle (5) eine Heizfolie ist.

3. Optoelektrische Baugruppe nach Anspruch 1 oder 2, **dadurch gekennzeichnet, dass** die Vergussmasse (7) aus Gips besteht.

4. Optoelektrische Baugruppe nach Anspruch 3, **dadurch gekennzeichnet, dass** der Gips mit Additiven wie Metallspänen versehen ist.

5. Optoelektrische Baugruppe nach einem der Ansprüche 1 bis 4, **dadurch gekennzeichnet, dass** an dem modularen Festkörperlaser (2) ein axial dichtendes Dichtmittel (6) angeordnet ist, wobei das axial dichtende Dichtmittel (6) einen Ringraum zwischen dem modularen Festkörperlaser (2) und der umgebenden Halterung (9) aus Metall in Richtung der Schwerkraft (G) abdichtet.

## Claims

1. Optoelectrical assembly (1) having a modular frequency-doubled solid state laser (2) which is fixed in a metal mounting (9) in an aligned position and which has an optical resonator (3), the optical resonator (3) being in thermally conductive communication with a heat source (5) able to be controlled by a control means (4) and the operating temperature (T) of the solid state laser (2) being set by means of the control means (4) at between 40°C and 55°C, **characterised in that** the solid state laser (2) is inset into the metal mounting (9) by means of a curable potting medium (7) having a thermal conductivity (A) in the range from 0.1 to 1.0 W/(Km).

2. Optoelectrical assembly according to claim 1, **characterised in that** the heat source (5) is a heating foil.

3. Optoelectrical assembly according to claim 1 or 2, **characterised in that** the potting medium (7) comprises gypsum.

4. Optoelectrical assembly according to claim 3, **characterised in that** the gysum is provided with additives such as swarf.

5. Optoelectrical assembly according to one of claims 1 to 4, **characterised in that** a sealant (6) which seals axially is arranged on the modular solid state laser (2), the sealant (6) which seals axially sealing off an annular space between the modular solid state laser (2) and the surrounding metal mounting (9) in the direction in which gravity (G) acts.

## Revendications

1. Ensemble optoélectrique (1) comportant un laser à solide modulaire doublé en fréquence (2), fixé de manière réglable dans un support (9) en métal, comportant un résonateur optique (3), dans lequel le résonateur optique (3) est relié de manière thermiquement conductrice à une source de chaleur (5) pouvant être commandée par des moyens de commande (4), et la température de fonctionnement (T) du laser à solide (2) est réglée entre 40 °C et 55 °C par l'intermédiaire des moyens de commande (4), **caractérisé en ce que** le laser à solide (2) est noyé dans le support (9) en métal par l'intermédiaire d'une composition de moulage durcissable (7) ayant une conductivité thermique (λ) dans la plage de 0,1 à 1,0 W/(Km).

2. Ensemble optoélectrique selon la revendication 1, **caractérisé en ce que** la source de chaleur (5) est un film chauffant.

3. Ensemble optoélectrique selon la revendication 1 ou 2, **caractérisé en ce que** la composition de moulage (7) est constituée de plâtre.

4. Ensemble optoélectrique selon la revendication 3, **caractérisé en ce que** le plâtre est muni d'additifs tel que des copeaux métalliques.

5. Ensemble optoélectrique selon l'une quelconque des revendications 1 à 4, **caractérisé en ce que** des moyens d'étanchéité axialement étanches (6) sont agencés sur le laser à solide modulaire (2), les moyens d'étanchéité axialement étanches (6) étanchéifiant un espace annulaire entre le laser à solide modulaire (2) et le support (9) en métal qui l'entoure en direction de la force de pesanteur (G).
